# EUROPÄISCHE PATENTSCHRIFT

(11) **EP 3 446 398 B1**
(45) Veröffentlichungstag und Bekanntmachung des Hinweises auf die Patenterteilung: **12.02.2020**
(21) Anmeldenummer: 17723654.4
(22) Anmeldetag: 05.05.2017
(51) Int. Cl.: H02K 9/20, H02K 15/00, H02K 17/16

(54) **KÄFIGLÄUFER EINER ASYNCHRONMASCHINE**
CAGE ROTOR FOR AN ASYNCHRONOUS MOTOR
INDUIT A CAGE D'ECUREUIL D'UNE MACHINE ASYNCHRONE

(30) Priorität: 16.06.2016 EP 16174676
(43) Veröffentlichungstag der Anmeldung: 27.02.2019
(73) Patentinhaber: Siemens Aktiengesellschaft, 80333 München (DE)
(72) Erfinder: BÜTTNER, Klaus, 97618 Hollstadt (DE); KIRCHNER, Klaus, 97645 Ostheim (DE); WARMUTH, Matthias, 97618 Windshausen (DE)
(86) Internationale Anmeldenummer: PCT/EP2017/060768
(87) Internationale Veröffentlichungsnummer: WO 2017/215834

(56) Entgegenhaltungen:
- EP-A1- 2 299 565
- EP-A1- 2 846 440
- DE-A1- 2 052 839
- DE-A1-102014 225 173

## Beschreibung

Die Erfindung betrifft einen Käfigläufer einer Asynchronmaschine, eine Asynchronmaschine und ein Verfahren zur Herstellung eines Käfigläufers einer Asynchronmaschine.

Käfigläufer von Asynchronmotoren werden prinzipbedingt vor allem durch Stromwärmeverluste im Betrieb der elektrischen Maschine aufgeheizt. Dabei treten insbesondere im Kurzschlussring an den Stirnseiten des Käfigläufers lokal sehr hohe Temperaturen von bis zu 250°C auf. Mit steigender Temperatur sinkt jedoch die Effizienz der dynamoelektrischen Maschine. Des Weiteren wird auch die Lebensdauer der Lager durch diese hohen Temperaturen stark reduziert.

Um die Stromwärmeverluste abzuführen, ist es bekannt, bei Käfigläufern von Asynchronmotoren am Kurzschlussring Flügel vorzusehen, um durch zusätzliche Luftzirkulation die Stromwärmeverluste aus den Kurzschlussringen an die Luft im Innenraum der dynamoelektrischen Maschine abzugeben. Diese Kühlmethode ist jedoch wenig effizient und kann die oben beschriebenen Nachteile nur unzureichend beheben.

Des Weiteren sind aus der EP 2 299 565 A1, der DE 20 52 839 A1 und der DE 10 2014 225 173 A1 Käfigläufer mit einem Thermosiphon bekannt.

Ausgehend davon, liegt der Erfindung die Aufgabe zugrunde, einen Käfigläufer einer Asynchronmaschine zu schaffen, der eine ausreichende Wärmeabfuhr aus dem Käfigläufer gewährleistet. Des Weiteren soll eine Asynchronmaschine mit hoher Effizienz bereitgestellt werden. Ebenso ist es eine Aufgabe der Erfindung ein dafür geeignetes Herstellverfahren bereitzustellen.

Die Lösung der gestellten Aufgabe gelingt durch einen Käfigläufer einer Asynchronmaschine nach Anspruch 1.

Die Lösung der gestellten Aufgabe gelingt ebenfalls durch eine Asynchronmaschine mit einem erfindungsgemäßen Käfigläufer als Antrieb für rad- oder schienengebundene Fahrzeuge, für maritime Anwendungen als auch für Luftfahrzeuge.

Ebenso gelingt die Lösung der gestellten Aufgabe durch ein Verfahren nach Anspruch 7.

Der Kurzschlussring des Käfigläufers wird erfindungsgemäß nunmehr als Thermosiphon ausgeführt, wobei dabei der Kurzschlussring einen Hohlraum aufweist, der mit Wasser oder einem anderen Kühlmittel befüllt ist. Entsprechend der Arbeitstemperatur des Kühlmittels in dem Hohlraum, wird bei der Herstellung des Käfigläufers dort ein Betriebsdruck, z.B. ein Vakuum generiert, um den idealen Arbeitspunkt des Kühlmittels für die jeweilige Anwendung der Asynchronmaschine zu schaffen. Der Hohlraum der Kurzschlussringe fungiert somit als Thermosiphon an den Stirnseiten des Käfigläufers, der einen magnetisch leitfähigen Grundkörper aufweist.

Erfindungsgemäß wird durch thermische Anbindung des Kurzschlussringes, vorzugsweise an eine flüssigkeitsgekühlte Welle eine gesteigerte Effizienz des Kreislaufs von Verdampfen und Kondensieren innerhalb des Thermosiphons erreicht. Dabei kommt es nunmehr im Inneren des Kurzschlussringes zur Kondensation. Nach der Kondensation des Kühlmittels, es liegt also eine Flüssigkeit vor, wird diese durch die im Betrieb der Asynchronmaschine auftretende Fliehkraft radial nach außen befördert. Auf dem Weg radial nach außen kommt es aufgrund der höheren Temperatur der den Hohlraum bildenden Flächen, insbesondere Richtung Stirnseite des magnetischen Grundkörpers zum Verdampfen des Kühlmittels. Dieser Dampf wird durch Überdruck entgegen der Fliehkraft wiederum in den inneren Bereich, also Richtung Welle zum Kondensator gedrückt.

Dort erfolgt eine Rückkühlung, insbesondere durch die flüssigkeitsgekühlte Welle. Somit wird also die Wärme im Kurzschlussring in die Welle transportiert und von dort über die Wellenkühlung aus dem Motorinnenraum abtransportiert.

Durch die spezielle Ausgestaltung des als Thermosiphon ausgeführten Kurzschlussringes also des bereitgestellten Hohlraumes durch geneigte Flächen werden sowohl der Verdampfungsals auch der Kondensationsprozess unterstützt.

Durch eine derartige Ausgestaltung eines Käfigläufers erhöht sich nunmehr die Effizienz eines Asynchronmotors. Der Asynchronmotor eignet sich u.a. besonders als Antrieb für Fahrzeuge aller Art, da beispielsweise diese Verlustenergie nicht an die Umgebung abgegeben werden muss, sondern ähnlich einer Kraftwärmekupplung für andere Anwendungen, beispielsweise in der Fahrzeugtechnik, zum Heizen einer Fahrgastzelle verwendbar ist.

Als Fahrzeuge werden dabei rad- und schienengebundene Fahrzeuge wie E-Cars, Straßenbahnen, Triebzüge, Lokomotiven, Busse und Minenfahrzeuge, aber auch Fahrzeuge in maritimen Bereichen, wie Kleinboote, Ausflugdampfer etc. verstanden. Ebenso eignet sich ein derartiger Asynchronmotor als Antrieb für Luftfahrzeuge wie E-Planes oder Helikopter.

Auch für andere Anwendungen im industriellen Umfeld z.B. bei Werkzeugmaschinen oder Kompressoren eignen sich derartige Antriebe.

Als Herstellverfahren zur Ausgestaltung des Hohlraums im Kurzschlussring eignen sich 3D-Druckverfahren, als auch ein Salzkerngießverfahren oder andere alternative hohlraumbildende Gießverfahren. Ebenso kann auch ein im Vollmaterial gegossener Kurzschlussring maschinell dementsprechend bearbeitet werden und durch einen Deckel abgeschlossen werden.

Um einen Betriebsdruck z.B. ein Vakuum in dem Hohlraum des Kurzschlussrings zu erhalten, kann über eine Vakuumöffnung, die anschließend verschließbar ist, eine Vakuumierung des Hohlraums und die Befüllung mit dem Kühlmittel erfolgen.

Die Erfindung sowie weitere vorteilhafte Ausgestaltungen der Erfindung werden anhand eines prinzipiell dargestellten Ausführungsbeispiels näher erläutert; darin zeigen:
- FIG 1: einen prinzipiellen Längsschnitt eines Asynchronmotors,
- FIG 2: eine Detaildarstellung im Längsschnitt eines Kurzschlussringes.

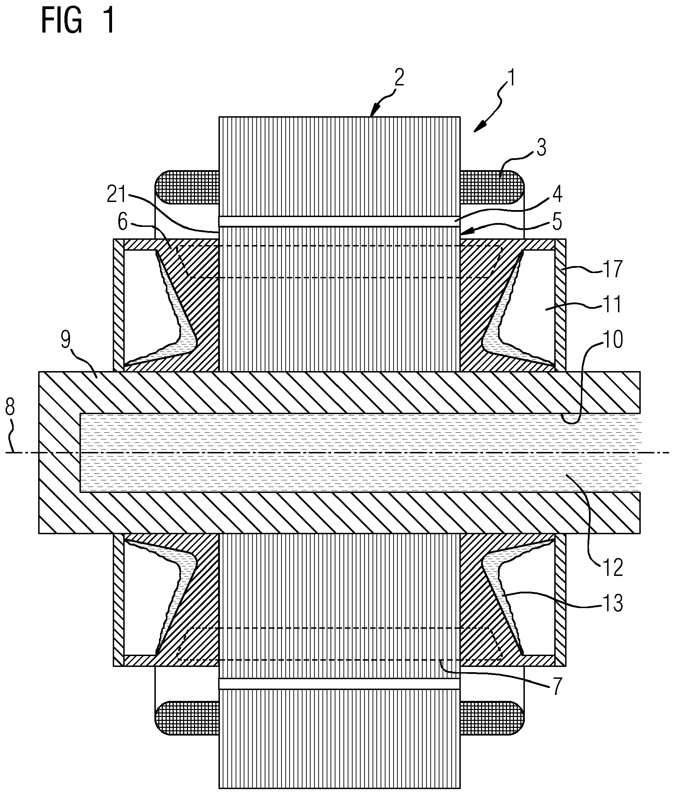

FIG 1 zeigt in einen prinzipiellen Längsschnitt eine Asynchronmaschine 1 mit einem geblecht ausgeführten Stator 2, der in nicht näher dargestellten Nuten des Stators 2 ein Wicklungssystem 3 aufweist, das an den Stirnseiten des Stators 2 Wickelköpfe ausbildet. Über einen Luftspalt 4 des Asynchronmaschine 1 erfolgt durch elektromagnetische Wechselwirkung mit einem Käfigläufer eine Drehung um eine Achse 8. Der Käfigläufer weist einen magnetisch leitfähigen Grundkörper 5 auf, der in diesem Fall als axial geschichtetes Blechpaket ausgeführt ist, aber ebenso als einstückig gesintertes Teil vorgesehen werden kann.

In nicht näher dargestellten axialen Nuten des Käfigläufers verlaufen dabei elektrische Leiter 7, die mit Kurzschlussringen 6 an den Stirnseiten des magnetischen Grundkörpers 5 elektrisch kontaktiert sind. Die Kurzschlussringe 6 an den Stirnseiten sind in dieser Ausführungsform sowohl mit der Stirnseite 21 des magnetischen Grundkörpers 5 als auch mit einer Welle 9 in thermisch leitfähigen Kontakt.

Jeder Kurzschlussring 6 weist einen Hohlraum auf, der als Thermosiphon 11 ausgeführt ist. In diesem Hohlraum findet nunmehr erfindungsgemäß eine Kondensation bzw. eine Dampfbildung derart statt, dass die Rückkühlung im Bereich des radialen Innenbereichs des Thermosiphons 11, also im Bereich der Welle 9 stattfindet. Die Welle 9 selbst wird in diesem Fall durch eine nicht näher dargestellte Lanzenkühlung mittels einer Wellenbohrung 10 und einen darin vorgesehenen Kühlmittel 12, Flüssigkeit oder Luft rückgekühlt.

Damit werden nunmehr u.a. die Stromwärmeverluste des Käfigläufers zumindest zum Teil über den Thermosiphon 11 des Kurzschlussrings 6, der vorzugsweise mit den Stirnseiten 21 in thermisch leitendem, direktem Kontakt steht, an eine flüssigkeits- oder luftgekühlten Welle 9 und deren Kühlmittel 12 abgegeben. Ein weiterer thermischer leitender Pfad ergibt sich von dem magnetisch leitenden Grundkörper 5 direkt an die Welle 9.

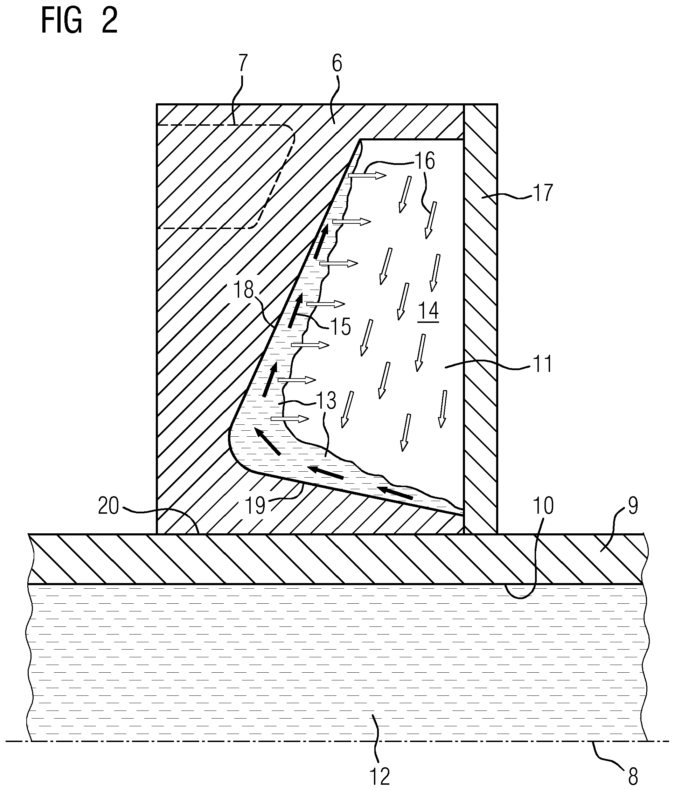

FIG 2 zeigt eine Detailansicht eines Kurzschlussringes 6 mit seinen Thermosiphon 11, wobei ein elektrischer Leiter 7 mit dem Kurzschlussring 6 elektrisch kontaktiert ist. Die im Käfigläufer, insbesondere im Kurzschlussring 6 anstehenden Verluste, werden nunmehr über ein Kühlmittel 13 auf seinem radialen Weg nach außen über die geneigten Flächen 18 an das Kühlmittel 13 abgegeben, das auf seinem radialen Weg nach außen immer mehr in den dampfförmigen Zustand 16 gerät. Aufgrund des sich im radial äußeren Bereich des Thermosiphons 11 bildenden Überdrucks wird nunmehr der Dampf radial zur Welle 9 hin nach innen drückt. Dabei findet wiederum eine Kondensation an der Welle 9, bevorzugt an den Flächen 19 statt und der Kreislauf kann erneut durchlaufen werden. Der Kurzschlussring 6 ist mittels einer Übergangswärmezone 20 zumindest thermisch direkt mit der Welle 9 verbunden.

Ein Deckel 17 ist vor allem dann vorgesehen, wenn sich der Hohlraum des Kurzschlussrings 6 durch einen spanabhebenden Arbeitsvorgang ergibt.

Die jeweiligen nicht näher dargestellten Vakuumöffnungen befinden sich vorzugsweise in achsparalleler Richtung an den Kurzschlussringen 6.

Die Flächen 18, 19 sind gegenüber der Achse 8 geneigt ausgeführt, um die erforderlichen Verdampfer- oder Rückkühlflächen bereitstellen zu können. Zusätzliche Profilierungen dieser Flächen 18, 19, beispielsweise durch mikroskalige Strukturen im mm-Bereich, können die angestrebten Effekte noch weiter verbessern.

Um den angestrebten Kühlungseffekt zu erhöhen, sind in dem Hohlraum des Kurzschlussringes 6, ausgehend von der Deckelseite 17 oder von der geneigten Fläche 18 axial und radial erstreckende Rippen vorgesehen. Deren geometrische Ausdehnung reicht in axialer und radialer Richtung je nach Ausgestaltung des Kurzschlussringes 6 von einigen mm bis zur gesamten radial und axial möglichen Ausdehnung innerhalb des Hohlraumes. Es bildet sich dementsprechend eine Speichenstruktur innerhalb des Hohlraumes aus, deren Segmente zwischen den Rippen untereinander strömungstechnisch in Verbindung stehen oder jeweils für sich abgeschlossen sind.

Bei strömungstechnisch abgeschlossenen Segmenten ist dann natürlich für jedes Segment der jeweilige Betriebsruck einzustellen.

Damit erhöhen sich die Verdampfer- und Rückkühlungsflächen.

Spezielle Verdampfer- und Rückkühlungsflächen innerhalb des Hohlraumes des Kurzschlussringes 6 lassen sich auch durch Verfahren des additive manufacturing bei einem durchspanabhebende Verfahren generierten Hohlraum im Kurzschlussring 6 herstellen.

Grundsätzlich kann der gesamte Kurzschlussring sogar mit derartigen speziellen Verdampfer- und Rückkühlungsflächen im Hohlraum auch folgendermaßen hergestellt werden. Dabei wird einem klassischen Blechpaket des Kurschlussläufer mit Leiterstäben und einer Welle 9, insbesondere Hohlwelle, der erfindungsgemäße Kurzschlussring mit Thermosiphon 11 angedruckt. Dabei werden vor allem die thermischen Übergänge Kurzschlussring und Stirnseiten des Blechpakets, als auch Welle 9 zum Kurzschlussring 6 mit geringen Wärmeübergangswiderständen ausgebildet.

## Patentansprüche

1. Käfigläufer einer Asynchronmaschine (1) mit einem magnetisch leitfähigen Grundkörper (5), welcher Käfigläufer um eine Achse (8) drehbar gelagert ist und in im Wesentlichen axial verlaufenden Nuten elektrische Leiter (7) aufweist, die durch an den Stirnseiten (21) des magnetischen Grundkörpers (5) vorgesehene Kurzschlussringe (6) elektrisch kontaktiert sind, wobei die Kurzschlussringe (6) an einer Welle (9) thermisch angebunden sind, **dadurch gekennzeichnet, dass** jeder Kurzschlussring (6) einen Hohlraum aufweist, der als Thermosiphon (11) ausgebildet ist.

2. Käfigläufer nach Anspruch 1, **dadurch gekenn-zeichnet**, dass die Kurzschlussringe (6) und/oder der Grundkörper (5) mit einer Welle (9) drehfest verbunden sind.

3. Käfigläufer nach Anspruch 2, **dadurch gekennzeichnet, dass** die Welle (9) eine Wellenkühlung aufweist.

4. Käfigläufer nach einem der vorhergehenden Ansprüche, **dadurch gekennzeichnet, dass** die Kurzschlussringe (6) hohl ausgeführt sind, derart, dass in dem jeweiligen Hohlraum des Kurzschlussrings (6) eine Dampfbildung bzw. Kondensation eines Kühlmediums erfolgt.

5. Käfigläufer nach Anspruch 4, **dadurch gekennzeichnet, dass** die der Stirnseite (21) des magnetischen Grundkörpers und/oder der Welle (9) zugewandten Seiten, also **die Flächen (18,19)** des Hohlraumes des Kurzschlussringes (6) bzgl. der Achse (8) bzw. Stirnseite (21) einen vorgegebenen Winkel aufweisen.

6. Asynchronmaschine mit einem Käfigläufer nach einem der vorhergehenden Ansprüche als Antrieb für rad- oder schienengebundene Fahrzeuge, für maritime Anwendungen, als auch für Antrieb für Luftfahrzeuge.

7. Verfahren zur Herstellung eines Käfigläufers nach Anspruch 1, mit den folgenden Schritten:
- Herstellung eines magnetisch leitfähigen Grundkörpers (5),
- Einsetzen von elektrischen Leitern (7) in im Wesentlichen axial verlaufende Nuten des magnetischen Grundkörpers (5),
- elektrisches Kontaktieren von Kurzschlussringen (6) an den Stirnseiten des magnetisch leitfähigen Grundkörpers (5) mit den elektrischen Leitern (7), wobei ein Hohlraum des Kurzschlussringes (6), durch ein 3D-Druckverfahren, durch Salzkerngießen oder durch eine maschinelle Bearbeitung eines angegossenen Kurzschlussrings (6) mit einer Abdichtung durch einen Deckel (17) hergestellt wird,
**wobei jeder Kurzschlussring (6) einen Hohlraum aufweist, der als Thermosiphon (11) ausgebildet ist.**

8. Verfahren nach Anspruch 7, **dadurch gekennzeichnet, dass** im Hohlraum des Kurzschlussrings (6) für eine entsprechende Bearbeitungstemperatur der Asynchronmaschine ein Betriebsdruck, insbesondere Unterdruck eingestellt wird, um den idealen Arbeitspunkt des Kühlmittels in dem erzeugten Hohlraum des Kurzschlussringes (6) zu schaffen.

## Claims

1. Squirrel cage rotor of an asynchronous machine (1) with a magnetically conductive main body (5), with said squirrel cage rotor being rotatably supported about an axis (8) and having electrical conductors (7) extending substantially axially in slots, which are electrically contacted by short-circuit rings (6) provided on the end faces (21) of the magnetic main body (5), wherein the short-circuit rings (6) are thermally linked to a shaft (9), **characterised in that** each short-circuit ring (6) has a void which is embodied as a thermosiphon (11).

2. Squirrel cage rotor according to claim 1, **characterised in that** the short-circuit rings (6) and/or the main body (5) are connected to a shaft (9) in a torsion-proof manner.

3. Squirrel cage rotor according to claim 2, **characterised in that** the shaft (9) has a shaft cooling system.

4. Squirrel cage rotor according to one of the preceding claims, **characterised in that** the short-circuit rings (6) are designed to be hollow, such that there is evaporation or condensation of a cooling medium in the respective void of the short-circuit ring (6),

5. Squirrel cage rotor according to claim 4, **characterised in that** the sides, i.e. the surfaces (18, 19) of the void of the short-circuit ring (6) facing towards the end face (21) of the magnetic main body and/or the shaft (9) are at a predetermined angle in relation to the axis (8) or the end face (21).

6. Asynchronous machine with a squirrel cage rotor according to one of the preceding claims as a drive for wheeled or track-based vehicles, for maritime applications, and also as a drive for aircraft.

7. Method for producing a squirrel cage rotor according to claim 1, with the following steps:
- Production of a magnetically conductive main body (5),
- Insertion of electrical conductors (7), extending substantially axially, into slots of the magnetic main body (5),
- Electrical contacting of short-circuit rings (6) on the end faces of the magnetically conductive main body (5) with electric conductors (7), wherein a void of the short-circuit ring (6) is produced by a 3D printing method, by sand casting or by a machining of a cast short-circuit ring (6) with sealing by a cover (17), wherein each short-circuit ring (6) has a void, which is embodied as a thermosiphon (11).

8. Method according to claim 7, **characterised in that**, for a corresponding operating temperature of the asynchronous machine, an operating pressure, especially a vacuum, is set in the void of the short-circuit ring (6), in order to create an ideal operating point of the coolant in the void created in the short-circuit ring (6).

## Revendications

1. Induit à cage d'écureuil d'une machine (1) asynchrone, comprenant une pièce (5) de base conductrice magnétiquement, lequel induit à cage d'écureuil est monté tournant autour d'un axe (8) et a des conducteurs (7) électriques dans des encoches (7) s'étendant sensiblement axialement, qui sont mises en contact électriquement par des anneaux (6) de court-circuit prévus sur les côtés (21) frontaux de la pièce (5) de base magnétique, les anneaux (6) de court-circuit étant reliés thermiquement à un arbre (9), **caractérisé en ce que** chaque anneau (6) de court-circuit a une cavité constituée en thermosiphon (11).

2. Induit à cage d'écureuil suivant la revendication 1, **caractérisé en ce que** les anneaux (6) de court-circuit et/ou la pièce (5) de base sont solidaires en rotation d'un arbre (9).

3. Induit à cage d'écureuil suivant la revendication 2, **caractérisé en ce que** l'arbre (9) a un refroidissement d'arbre.

4. Induit à cage d'écureuil suivant l'une des revendications précédentes, **caractérisé en ce que** les anneaux (6) de court-circuit sont réalisés creux, de manière à produire, dans la cavité respective de l'anneau (6) de court-circuit, une formation de vapeur ou une condensation d'un fluide de refroidissement.

5. Induit à cage d'écureuil suivant la revendication 4, **caractérisé en ce que** les côtés tournés vers le côté (21) frontal de la pièce magnétique et/ou vers l'arbre (9), dont des surfaces (18, 19) de la cavité de l'anneau (6) de court-circuit ou de l'axe (8) où le côté (21) frontal ont un angle donné à l'avance.

6. Machine asynchrone comprenant un induit à cage d'écureuil suivant l'une des revendications précédentes, comme propulsion de véhicule sur rail ou sur roue, pour des applications maritimes, ainsi qu'également pour la propulsion d'aéronefs.

7. Procédé de fabrication d'un induit à cage d'écureuil suivant la revendication précédente, comprenant les stades suivants :
- fabrication d'une pièce (5) conductrice magnétiquement,
- insertion de conducteurs (7) électriques dans des encoches s'étendant sensiblement axialement de la pièce (5) magnétique,
- mise en contact électrique d'anneaux (6) de court-circuit sur les côtés frontaux de la pièce (5) conductrice magnétiquement avec les conducteurs (7) électriques, une cavité de l'anneau (6) de court-circuit étant ménagée par un procédé d'impression en 3D, par coulée au noyau de sel ou par un usinage automatique d'un anneau (6) de court-circuit coulé, avec une étanchéité par un couvercle (17), dans lequel chaque anneau (6) de court-circuit a une cavité constituée en thermosiphon (11).

8. Procédé suivant la revendication 7, **caractérisé en ce que** l'on règle, dans la cavité de l'anneau (6) de court-circuit, pour une température de travail correspondante de la machine asynchrone, une pression de fonctionnement, notamment une dépression, afin d'obtenir le point de travail idéal du fluide de refroidissement dans la cavité produite de l'anneau (6) de court-circuit.
